# EUROPÄISCHE PATENTSCHRIFT

(11) **EP 3 289 326 B1**
(45) Veröffentlichungstag und Bekanntmachung des Hinweises auf die Patenterteilung: **27.01.2021**
(21) Anmeldenummer: 16717954.8
(22) Anmeldetag: 22.04.2016
(51) Int. Cl.: G01L 1/16, G01L 5/00

(54) **KONTAKTKRAFT-PRÜFVORRICHTUNG, VERWENDUNG EINER SOLCHEN KONTAKTKRAFT-PRÜFVORRICHTUNG UND VERFAHREN ZUR HERSTELLUNG EINER SOLCHEN KONTAKTKRAFT-PRÜFVORRICHTUNG**
CONTACT FORCE TESTING DEVICE, USE OF SUCH A CONTACT FORCE TESTING DEVICE, AND A METHOD FOR PRODUCING SUCH A CONTACT FORCE TESTING DEVICE
DISPOSITIF DE VÉRIFICATION DE FORCE DE CONTACT, UTILISATION D'UN TEL DISPOSITIF DE VÉRIFICATION DE FORCE DE CONTACT ET PROCÉDÉ DE RÉALISATION D'UN TEL DISPOSITIF DE VÉRIFICATION DE FORCE DE CONTACT

(30) Priorität: 30.04.2015 CH 5942015
(43) Veröffentlichungstag der Anmeldung: 07.03.2018
(73) Patentinhaber: Kistler Holding AG, 8408 Winterthur (CH)
(72) Erfinder: MASTROGIACOMO, Giovanni, 8005 Zürich (CH); CAVALLONI, Claudio, 8105 Regensdorf (CH); BRANDENBERGER, Sandro, 8450 Andelfingen (CH); FURTER, Paul, 8332 Russikon (CH); STAUB, Reinhard, 8704 Herrliberg (CH); THIEL, Rolf, 8471 Bänk (Dägerlen) (CH)
(86) Internationale Anmeldenummer: PCT/EP2016/059086
(87) Internationale Veröffentlichungsnummer: WO 2016/173952

(56) Entgegenhaltungen:
- DE-A1- 10 056 993
- GB-A- 2 465 068
- JP-A- S5 214 468
- JP-U- S52 169 766
- US-A- 3 281 612

## Beschreibung

### Technisches Gebiet

Die Erfindung betrifft eine Kontaktkraft-Prüfvorrichtung mit einem Messtaster, eine Verwendung einer solchen Kontaktkraft-Prüfvorrichtung und ein Verfahren zur Herstellung einer solchen Kontaktkraft-Prüfvorrichtung.

### Stand der Technik

Piezoelektrisches Material wird vielerorts zum Aufnehmen von Druck, Kraft und Beschleunigung verwendet. Wie im Buch "Piezoelectric Sensors" von G. Gautschi, veröffentlicht im Springer Verlag beschrieben, lässt sich ein piezoelektrischer Kristall wie Quarz (SiO₂ Einkristall), Calcium-Gallo-Germanat (Ca₃Ga₂Ge₄O1₄ oder CGG), Langasit (La₃Ga₅SiO₁₄ oder LGS), Turmalin, Galliumorthophosphat, usw. in plattenförmige- oder stabförmige Elemente schneiden, welche Elemente mechanischen Spannungen ausgesetzt werden. Ein piezoelektrischer Aufnehmer bildet somit einen Kondensator, bei dem das piezoelektrische Material zwischen zwei Abnehmerelektroden angeordnet ist. Beim direkten piezoelektrischen Effekt werden dabei elektrische Polarisationsladungen erzeugt, die proportional zur Grösse der mechanischen Spannungen sind. Werden die elektrischen Polarisationsladungen auf piezoelektrischen Materialoberflächen erzeugt, deren Flächennormale parallel zur wirkenden mechanischen Normalspannung ist, so liegt ein longitudinaler piezoelektrischer Effekt vor. Werden die elektrischen Polarisationsladungen auf piezoelektrischen Materialoberflächen erzeugt, deren Flächennormale senkrecht zur wirkenden mechanischen Normalspannung ist, so liegt ein transversaler piezoelektrischer Effekt vor. Über Abnehmerelektroden werden die elektrischen Polarisationsladungen als Ausgangssignal abgenommen. Der elektrische Isolationswiderstand zwischen den Abnehmerelektroden beträgt über 10TΩ.

Neben piezoelektrischen Kristallen lassen sich auch Piezokeramiken wie Bariumtitanat (BaTiO₃), Mischungen (PZT) aus Bleititanat (PbTiO₃) und Bleizirkonat (PbZrO₃), usw. sowie piezoelektrische Polymere wie Polyvinylidenfluorid (PVDF), Polyvinylfluorid (PVF), Polyvinylchlorid (PVC), usw. als piezoelektrisches Material verwenden, wie in DE2831938A1 offenbart.

Elektrische Steckverbindungen weisen männliche Kontaktelemente wie Kontaktstecker, Kontaktstifte, usw. und weibliche Kontaktelemente wie Kontaktkupplungen, Kontaktbuchsen, usw. auf. Die männlichen- und weiblichen Kontaktelemente sind beispielsweise über Kraftschluss reversibel miteinander kontaktierbar. So sind Lamellenkontakte bekannt, mit einer Kontaktbuchse die in Längsrichtung mehrere durch Schlitze beabstandete Lamellen aufweist, welche Lamellen einen eingesteckten Kontaktstift im Bereich einer Kontaktüberdeckung aussenseitig über Federkraft halten. Solche Kontakte müssen oft eine genormte Kontaktkraft erfüllen. Bei der Produktion der elektrischen Steckverbindungen wird daher im Rahmen der Qualitätskontrolle geprüft, ob die Kontaktkraft vordefinierte Sollwerte erfüllt. Dabei wird auch geprüft, ob die elektrischen Steckverbindungen bei erhöhten Einsatztemperaturen von 140°C oder auch 160°C zuverlässig miteinander kontaktieren.

Piezoelektrische Polymere lassen sich als dünne Lagen von kleiner 100µm Dicke herstellen, was mit piezoelektrischen Kristallen nicht möglich ist. Die Mindestdicke von piezoelektrischen Kristallen liegt bei 100µm. Somit sind piezoelektrische Polymere für sehr flach bauende Aufnehmer prädestiniert Auch weist PVDF eine rund 10mal höhere piezoelektrische Empfindlichkeit als SiO₂ Einkristall auf. Andererseits ist der Elastizitätsmodul von PVDF rund 40mal kleiner als derjenige von SiO₂ Einkristall, was zu einer vergleichsweise geringen Steifigkeit führt, wodurch PVDF nur eingeschränkt mechanisch belastbar ist, was wiederum vergleichsweise qualitativ schlechte Ausgangssignalen mit hohen Hysteresen und Abweichungen von der Linearität zur Folge hat. Auch hat PVDF eine hohe Temperaturabhängigkeit der piezoelektrischen Eigenschaften, wodurch sein Einsatzbereich auf Temperaturen kleiner 80°C begrenzt, während piezoelektrische Kristalle wie LGS auch noch bei Temperaturen von 600°C einsetzbar sind.

Aus der DE4003552A1 ist eine Kontaktkraft-Prüfvorrichtung mit einem Messtaster zur Messung der Kontaktkraft bei elektrischen Steckverbindungen bekannt. Der Messtaster weist einen piezoelektrischen Aufnehmer auf, der aus einer Lage piezoelektrischer Polymere, welche in Richtung ihrer länglichen Ausdehnung mittig zwischen zwei Lagen mit Abnehmerelektroden angeordnet ist, besteht. Der piezoelektrische Aufnehmer ist elektrisch isoliert. Dazu sind oberhalb und unterhalb einer jeden Lage Abnehmerelektroden jeweils eine Lage elektrisches Isolationsmaterial und darüber und darunter wiederum jeweils eine Deckplatte angeordnet. Die zu prüfende Kontaktbuchse ist über die Deckplatten mit dem Messtaster kontaktierbar, dazu wird der Messtaster in die Kontaktbuchse getaucht. Die Länge, mit der der Messtaster in die Kontaktbuchse taucht, wird Kontaktüberdeckung genannt. Breite und Dicke des Messtasters betragen 0.7mm, die Länge der Kontaktüberdeckung beträgt 1.0mm.

JPS52014468A1 und JPS52169766U1 beschreiben eine Kontaktkraft-Prüfvorrichtung mit einer Elektrode, die zwischen zwei piezoelektrischen Filmlagen gebondet ist. Eine Kontaktkraft eines Kontaktstückes wird gemessen, indem das Kontaktstück die Kontaktkraft-Prüfvorrichtung in einer Kontaktzone kontaktiert. Die piezoelektrischen Filmlagen nehmen die Kontaktkraft auf und erzeugen Polarisationsladungen. In der Kontaktzone ist die Elektrode vollständig von piezoelektrischen Filmlagen umgeben. Die Elektrode nimmt die erzeugten Polarisationsladungen ab.

US3281612A1 lehrt einen piezoelektrischen Kraftaufnehmer mit stoffschlüssigen Verbindungen von mehreren piezoelektrischen Scheiben über darauf aufgedampfte Metallschichten.

Und GB2465068A1 ist auf einen Leitungsschutzschalter mit einer Piezokeramik zum Messen einer Kontaktkraft von Schalterkontakten gerichtet. Eine auf die Piezokeramik wirkende Kraft führt zu einer Widerstandsänderung, welche Widerstandsänderung von einer elektrischen Auswerteeinheit gemessen werden kann.

DE10056993A1 zeigt einen piezokeramischen Kraftsensor, der in kleinen Einbauräumen einsetzbar ist. Ein biegsames Substrat ist von einer dünnen piezokeramischen Schicht umhüllt, welche wiederum von einer dünnen Elektrode umhüllt ist. Eine sensitive Fläche der dünnen Elektrode kann in einen kleinen Einbauraum hineinragen.

Nun werden die Abmessungen von elektrischen Steckverbindungen immer kleiner und dementsprechend muss auch die Kontaktkraft-Prüfvorrichtung immer kleiner bauen. Eine erste Aufgabe der vorliegenden Erfindung ist es, die bekannte Kontaktkraft-Prüfvorrichtung weiter zu miniaturisieren und ein Verfahren zur Herstellung einer solchen Kontaktkraft-Prüfvorrichtung bereitzustellen. Zudem wird eine Verwendung einer Kontaktkraft-Prüfvorrichtung zum Prüfen der elektrischen Steckverbindungen bei erhöhten Einsatztemperaturen gefordert. Schliesslich soll die Kontaktkraft-Prüfvorrichtung möglichst einfach aufgebaut, günstig herstellbar, robust und steif sein, eine hohe Standzeit, eine hohe Verfügbarkeit und eine hohe Messgenauigkeit gewähren. Auch diese weiteren Aufgaben sind der Erfindung gestellt.

### Darstellung der Erfindung

Zumindest eine dieser Aufgaben wird durch die Merkmale der unabhängigen Ansprüche gelöst.

Die Erfindung betrifft eine Kontaktkraft-Prüfvorrichtung, mit einem Messtaster, welcher mit einem elektrischen Kontaktelement kontaktierbar ist und eine Kontaktkraft eines Kontakts mit dem elektrischen Kontaktelement misst, und wobei der Messtaster piezoelektrisches Material aufweist, welches die Kontaktkraft in einem Kontaktbereich aufnimmt und Polarisationsladungen erzeugt. Der Messtaster weist eine Abnehmerelektrode auf, welche im Kontaktbereich in Richtung einer Dickenausdehnung des Messtasters vollständig von piezoelektrischem Material umgeben ist und die Polarisationsladungen abnimmt.

Ein erfindungsgemässer Vorteil gegenüber dem Stand der Technik nach der DE4003552A1 liegt also darin, dass die intrinsischen Isolationseigenschaften des piezoelektrischen Materials verwendet werden, um den Messtaster elektrisch zu isolieren. Im Kontaktbereich in Richtung der Dickenausdehnung des Messtasters wird somit kein weiteres elektrisches Isolationsmaterial benötigt, was die Dicke des Messtasters verringert und dessen Aufbau vereinfacht. Solch elektrisches Isolationsmaterial wie Keramik, Al₂O₃-Keramik, usw. ist aufwändig und somit teuer in der Bearbeitung, was die Herstellung der Kontaktkraft-Prüfvorrichtung vereinfacht und günstig macht. Auch weist solch weiteres elektrisches Isolationsmaterial über die Lebensdauer und bei hoher Einsatztemperatur eine Abnahme des Isolationswertes, was den Einsatz bei erhöhten Temperaturen sowie die Standzeit und Verfügbarkeit der Kontaktkraft-Prüfvorrichtung einschränkt.

Die Erfindung betrifft auch eine Verwendung einer solchen Kontaktkraft-Prüfvorrichtung und ein Verfahren zur Herstellung einer solchen Kontaktkraft-Prüfvorrichtung.

### Kurze Beschreibung der Zeichnungen

Im Folgenden wird die Erfindung beispielhaft unter Beizug der Zeichnungen näher erklärt. Es zeigen
- Fig. 1: schematisch in Ansicht eine elektrische Steckverbindung, die in einem Kontaktbereich mit einer Kontaktkraft reversibel kontaktiert ist;
- Fig. 2: einen Schnitt durch eine Ausführungsform einer Kontaktkraft-Prüfvorrichtung mit Messtaster;
- Fig. 3: eine Ansicht einer Ausführungsform eines weiblichen Kontaktelement, dessen Kontaktkraft mit der Kontaktkraft-Prüfvorrichtung nach Fig. 2 messbar ist;
- Fig. 4: einen Schnitt durch einen Ausschnitt der Kontaktkraft-Prüfvorrichtung nach Fig. 2 mit Details zum Messtaster;
- Fig. 5: einen Schnitt durch einen Ausschnitt der Kontaktkraft-Prüfvorrichtung nach Fig. 4 mit Details zum Kontaktbereich des Messtasters;
- Fig. 6: einen Schnitt durch einen Ausschnitt der Kontaktkraft-Prüfvorrichtung nach Fig. 5 mit Details zum Aufbau des Messtasters;
- Fig. 7: eine perspektivische Sicht der Kontaktkraft-Prüfvorrichtung nach Fig. 2;
- Fig. 8: einen Querschnitt durch einen Ausschnitt der Kontaktkraft-Prüfvorrichtung nach Fig. 5 mit Details zum Aufbau des Messtasters im Kontaktbereich;
- Fig. 9: einen Schnitt durch einen Ausschnitt der Kontaktkraft-Prüfvorrichtung nach Fig. 4 mit Details zur Schutzkappe und zur Schutzhülle des Messtasters;
- Fig. 10: einen Schnitt durch einen Ausschnitt des Messtasters nach Fig. 9 mit Details zur Schutzhülle des Messtasters im Kontaktbereich; und
- Fig. 11: einen Schnitt durch einen Ausschnitt des Messtasters nach Fig. 9 mit Details zur Schutzhülle des Messtasters im Befestigungsbereich.

### Wege zur Ausführung der Erfindung

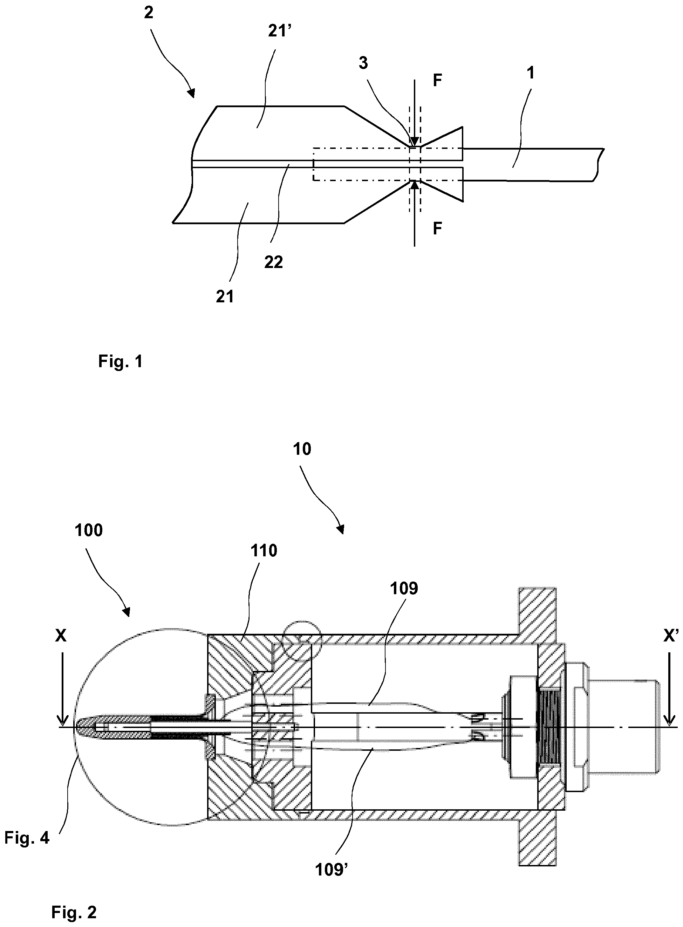

Fig. 1 gibt schematisch in Ansicht eine elektrische Steckverbindung wieder. Die elektrische Steckverbindung weist ein männliches Kontaktelement in Form eines Kontaktstifts 1 auf und sie weist ein weibliches Kontaktelement in Form einer Kontaktbuchse 2 auf. Der Kontaktstift 1 ist reversibel mit der Kontaktbuchse 2 kontaktierbar. Dazu wird der Kontaktstift 1 in die Kontaktbuchse 2 getaucht, so dass sich die beiden Kontaktelemente bereichsweise überdecken. Der Kontaktstift 1 ist im entsprechenden Bereich der Kontaktüberdeckung strichpunktiert dargestellt. In einem mit begrenzenden Strichlinien gekennzeichneten Kontaktbereich 3 findet ein Kraftschluss statt. Die Kontaktbuchse 2 ist im Bereich der Kontaktüberdeckung geschlitzt, beispielsweise sind mehrere Kontaktbuchsenlamellen 21, 21' bereichsweise durch mindestens einen Kontaktbuchsenschlitz 22 voneinander beabstandet und bilden somit ein Federelement. Eine Kontaktkraft F wird durch nach aussen biegen dieses Federelements erzeugt. Die Kontaktbuchse 2 kann mehrere, beispielsweise sechs Kontaktbuchsenlamellen aufweisen. Die Kontaktelemente sind aus metallischem Werkstoff wie Kupfer, Kupferlegierungen, usw. gefertigt. Der Durchmesser des Kontaktstifts 1 liegt im Bereich von 0.35mm bis 25.4mm. Je nach Grösse der Kontaktelemente liegt die Kontaktkraft F im Bereich von 1N bis 10N. Bei Kenntnis der vorliegenden Erfindung kann das Federelement auch am männlichen Kontaktelement wie bei einem 4mm-Federstecker (Bananenstecker) angebracht sein.

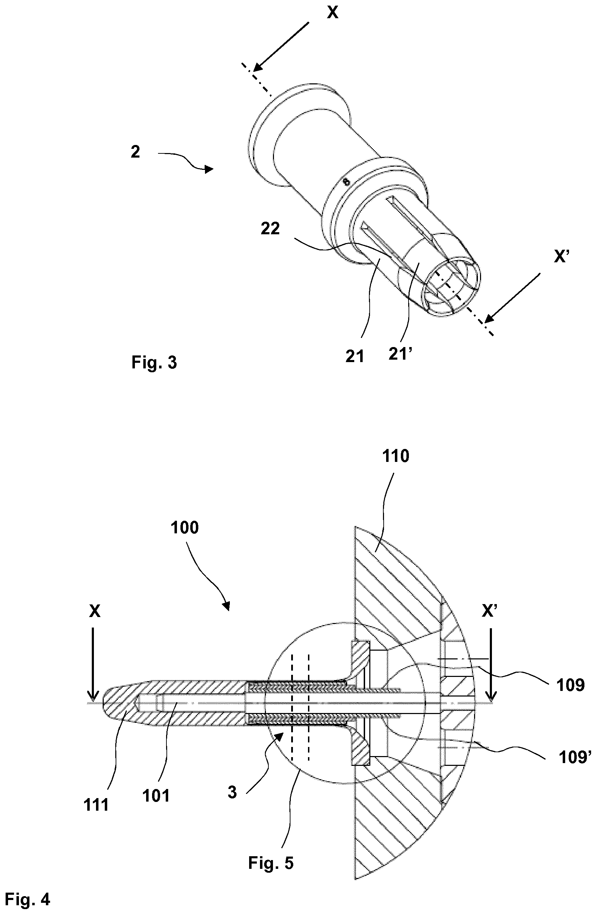

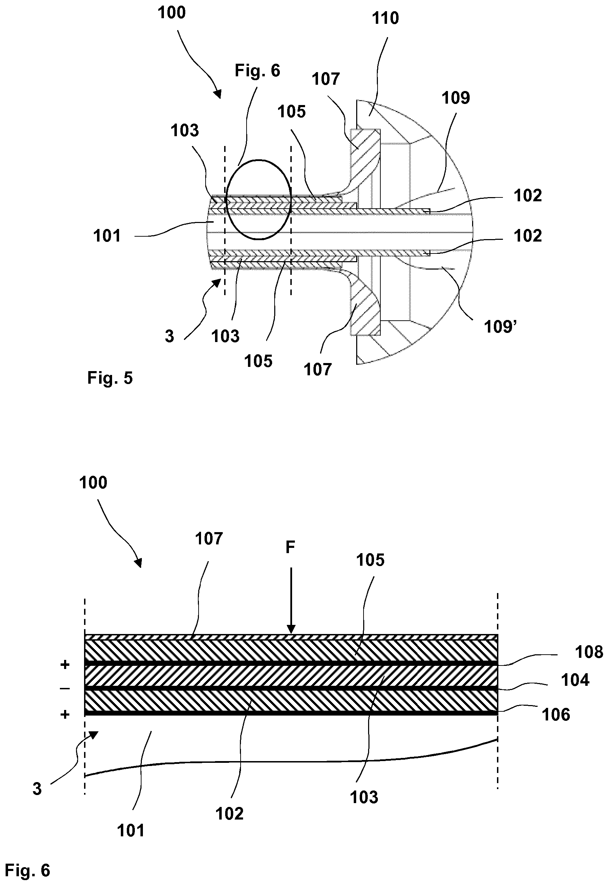

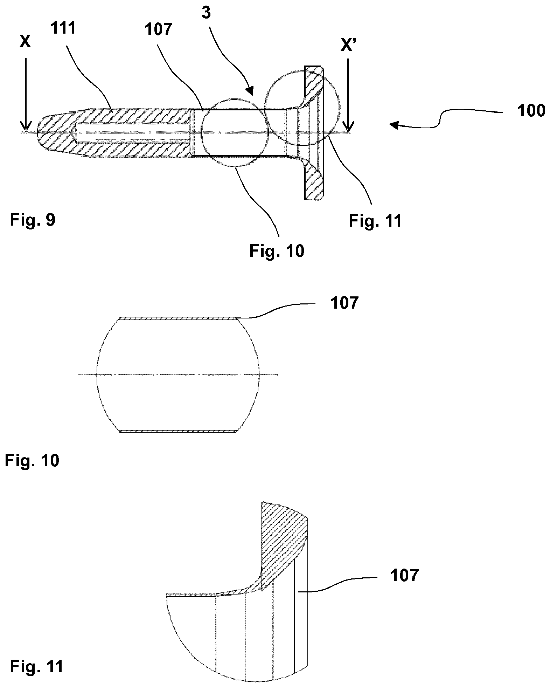

Fig. 2 zeigt einen Schnitt durch eine Ausführungsform einer Kontaktkraft-Prüfvorrichtung 10 mit Messtaster 100. Der Messtaster 100 ist mit einem in Fig. 3 abgebildeten weiblichen Kontaktelement in Form einer Kontaktbuchse 2 kontaktierbar. Messtaster 100 und Kontaktbuchse 2 sind weitgehend kreissymmetrisch bezüglich einer Mittenachse XX' aufgebaut. Eine längliche Ausdehnung von Messtaster 100 und Kontaktbuchse 2 verläuft parallel zu deren Mittenachse XX'. In den Fig. 2, 4, 7 und 9 ist die Mittenachse XX' des Messtasters 100 in einem Mittelpunkt des Messtasters 100 gezeichnet. Die Fig. 2, 4, 5, 6 und 9 sind in Richtung einer Dickenausdehnung des Messtasters 100 geschnitten. Die Dickenausdehnung des Messtasters 100 verläuft normal zur länglichen Ausdehnung des Messtasters 100. Details zum Messtaster 100 sind in Fig. 4 abgebildet. Details zu einem Kontaktbereich 3 des Messtasters 100 sind in Fig. 5 bis 8 dargestellt. Details zu einer Schutzhülle 107 des Messtasters 100 sind in Fig. 9 bis 11 dargestellt. Bei Kenntnis der vorliegenden Erfindung kann ein Fachmann den Messtaster abwandeln, um den Messtaster mit einem männlichen Kontaktelement zu kontaktieren.

Zum Messen einer Kontaktkraft F des weiblichen Kontaktelements wird der Messtaster 100 bezüglich der Mittenachse XX' schräg unterhalb dem Federelement des weiblichen Kontaktelements positioniert. Mit schräg werden Winkel bezeichnet, die von 0° oder 180° verschieden sind, Winkel von 0° oder 180° werden als parallel bezeichnet. Die Kontaktkraft F wird als Normalkontaktkraft gemessen, die normal zur Mittenachse XX' und somit parallel zur Dickenausdehnung des Messtasters 100 wirkt. In Fig. 6 ist die Kontaktkraft F mit einem Kraftpfeil dargestellt. Der Messtaster 100 weist in einem vorderen Bereich eine Schutzkappe 111 auf und er weist im Kontaktbereich 3 piezoelektrisches Material 102, 103 auf. Über die Schutzkappe 111 wird der Messtaster 100 in das weibliche Kontaktelement getaucht. Dabei gleitet die Schutzkappe 111 über eine Innenfläche des weiblichen Kontaktelements bis dass der Kontaktbereich 3 des Messtasters 100 unterhalb dem Federelement des weiblichen Kontaktelements positioniert ist. Um die Abnutzung bei dieser Positionierung möglichst gering zu halten, ist die Schutzkappe 111 aus abriebfestem Material wie Edelstahl, Stahllegierungen, usw. gefertigt und weist als Eintauchhilfe eine sich verjüngende Spitze auf. Natürlich darf die Schutzkappe 111 selber nicht zu abriebfest sein, um das weibliche Kontaktelement beim Messen der Kontaktkraft nicht durch Abrieb zu beschädigen.

Über das piezoelektrische Material 102, 103 nimmt der Messtaster 100 im Kontaktbereich 3 die Kontaktkraft F auf. Auch weist der Messtaster 100 eine Abnehmerelektrode 104 auf, welche im Kontaktbereich 3 in Richtung der Dickenausdehnung des Messtasters 100 vollständig von piezoelektrischem Material 102, 103 umgeben ist und die Polarisationsladungen abnimmt. Anfang und Ende des Kontaktbereiches 3 sind in den Fig. 4 bis 6 beispielhaft mit Strichlinien gekennzeichnet. Schutzkappe 111 und Kontaktbereich 3 sind entlang der länglichen Ausdehnung des Messtasters 100 angeordnet. Schliesslich ist der Messtaster 100 in einem Befestigungsbereich an einem Träger 110 angebracht. Über den Träger 110 lässt sich die Kontaktkraft-Prüfvorrichtung 10 ortsfest stabil befestigen. Der Träger 110 ist aus mechanisch beständigem Material wie Edelstahl, Stahllegierungen, usw. gefertigt.

Das piezoelektrische Material 102, 103 kann aus piezoelektrischem Kristall wie (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, usw. bestehen. Das piezoelektrische Material 102, 103 kann aber auch aus Piezokeramiken wie Bariumtitanat (BaTiO₃), Mischungen (PZT) aus Bleititanat (PbTiO₃) und Bleizirkonat (PbZrO₃), usw. sowie piezoelektrische Polymere wie Polyvinylidenfluorid (PVDF), Polyvinylfluorid (PVF), Polyvinylchlorid (PVC), usw. bestehen. Der Messtaster 100 weist mindestens zwei Lagen piezoelektrischen Materials 102, 103 mit einer Dicke von kleiner/gleich 200pm auf. Bei Verwendung von piezoelektrischem Material 102, 103 aus piezoelektrischem Kristall sind die Lagen als plattenförmige oder stabförmige Elemente mit definierter Kristallorientierung geschnitten. Falls das piezoelektrische Material 102, 103 aus piezoelektrischem Kristall besteht, ist die Kontaktkraft-Prüfvorrichtung 10 auch bei Einsatztemperaturen grösser/gleich 100°C, vorzugsweise bei Einsatztemperaturen im Bereich von 140°C bis 160°C, vorzugsweise bei Einsatztemperaturen kleiner/gleich 600°C einsetzbar. Falls das piezoelektrische Material 102, 103 aus piezoelektrischen Polymeren besteht, sind die Lagen als dünne Folien verfügbar. Das piezoelektrische Material kann in gängigen Dünnschichtverfahren mit definierter Kristallorientierung abgeschieden sein.

Die Lagen piezoelektrischen Materials 102, 103 sind ein- oder beidseitig metallisiert. Die Metallisierung kann durch Thermokaschieren mit einer Metallfolie oder durch Abscheiden von Metall geschehen. Als Metall lassen sich Kupfer, Kupferlegierungen, Gold, Goldlegierungen, Aluminium, Aluminiumlegierungen, Silber, Silberlegierungen, usw. verwenden.

Die Lagen piezoelektrischen Materials 102, 103 sind kristallographisch so orientiert, dass unter der Wirkung der Kontaktkraft F die elektrischen Polarisationsladungen auf der einen Lagenseite als elektrisch negative Oberflächenladungen erzeugt werden und auf der anderen Lagenseite als elektrisch positive Oberflächenladungen erzeugt werden. Um die elektrisch negativen Oberflächenladungen aufzunehmen, sind die Lagen piezoelektrischen Materials 102, 103 auf der Seite der erzeugten elektrisch negativen Oberflächenladungen mit einer ersten Metallisierung versehen. Um die elektrisch positiven Oberflächenladungen aufzunehmen, sind die Lagen piezoelektrischen Materials 102, 103 auf der Seite der erzeugten elektrisch positiven Oberflächenladungen mit einer zweiten und dritten Metallisierung versehen.

Die erste Metallisierung dient aber auch als Fügematerial. Denn um die Empfindlichkeit des Messtasters 100 zu erhöhen und um das piezoelektrische Material 102, 103 mit gängigen Herstellungsverfahren weiterverarbeiten zu können, sind wie in Fig. 6 dargestellt, zwei Lagen piezoelektrischen Materials 102, 103 über ihre ersten Metallisierungen stoffschlüssig miteinander verbunden. Diese stoffschlüssige Verbindung erfolgt über Diffusionsschweissen (Thermokompressionsbonden), Löten, Verkleben mit elektrisch leitfähigem Klebematerial, usw.. Somit bilden die stoffschlüssig miteinander verbundenen ersten Metallisierungen eine Abnehmerelektrode 104 in Form einer Lage metallischen Materials. Die Abnehmerelektrode 104 ist zwischen zwei benachbarten Lagen piezoelektrischen Materials 102, 103 angeordnet und nimmt deren elektrisch negative Oberflächenladungen auf. Diese Abnehmerelektrode 104 ist um einen Faktor 2, vorzugsweise um einen Faktor 10 dünner als Abnehmerelektroden aus dem Stand der Technik. Vorteilhafterweise ist die Dicke der ersten Metallisierungen grösser/gleich der maximalen Rauhtiefe des piezoelektrischen Materials 102, 103. Damit ist sichergestellt, dass das Metall der ersten Metallisierungen beim Diffusionsschweissen bei relativ tiefen Metallisierungstemperaturen zwischen 100°C und 450°C gut diffundieren kann und dass dieses Metall so nach dem Diffusionsschweissen weitgehend alle Oberflächenbereiche der miteinander verbundenen Lagen piezoelektrischen Materials 102, 103 bedeckt. Denn bei solchen relativ tiefen Temperaturen diffundiert das piezoelektrische Material 102, 103 nicht oder nur geringfügig. Somit kann die Abnehmerelektrode 104 weitgehend alle elektrisch negativen Oberflächenladungen aufnehmen, was wiederum zu qualitativ hochwertigen Ausgangssignalen mit niedrigen Hysteresen von kleiner/gleich 3% FSO und hoher Linearität von kleiner/gleich 3% FSO führt, wobei FSO die Abkürzung von Full Scale Output oder auf Deutsch Vollbereichssignal ist. Die so entstandene Lage metallischen Materials weist eine Dicke von kleiner/gleich 5µm auf.

Die von der Abnehmerelektrode 104 abgenommenen Polarisationsladungen werden über einen elektrischen Leiter 109, 109' abgeführt und sind auswertbar. Für eine einfache und sichere elektrische Verbindung des elektrischen Leiters 109, 109' mit der Abnehmerelektrode 104 ist eine erste Lage piezoelektrischen Materials 102 in Richtung der länglicher Ausdehnung des Messtasters 100 länger als eine zweite Lage piezoelektrischen Materials 103 ausgebildet. Nach Fig. 4 und 5 ist die erste Lage piezoelektrischen Materials 102 in Richtung der Dickenausdehnung des Messtasters 100 näher an der Mittenachse XX' angeordnet und bereichsweise länger ausgebildet. Die erste Lage piezoelektrischen Materials 102 weist auf der von der Mittenachse XX' abgewandten Seite eine erste Metallisierung auf. In dem Bereich wo die erste Lage piezoelektrischen Materials 102 länger ausgebildet ist, liegt die erste Metallisierung der ersten Lage piezoelektrischen Materials 102 frei und ist für eine elektrische Verbindung mit dem elektrischen Leiter 109, 109' zugänglich. Diese elektrische Verbindung kann stoffschlüssig sein und über Diffusionsschweissen, Verkleben mit elektrisch leitfähigem Klebematerial, usw. erfolgen. Diese elektrische Verbindung kann aber auch kraftschlüssig sein und über Federkontakt, usw. erfolgen. Jeweils eine Lage piezoelektrischen Materials 102 ist so mit einem elektrischen Leiter 109, 109' elektrisch verbunden. Der elektrische Leiter 109, 109' wiederum ist mit einem nicht dargestellten Ladungsverstärker elektrisch verbunden, welcher Ladungsverstärker die abgenommenen Polarisationsladungen in eine dazu direkt proportionale Spannung wandelt.

Der Messtaster 100 weist eine Grundplatte 101 auf, welche in Richtung der länglichen Ausdehnung des Messtasters 100 angeordnet ist. Die Grundplatte 101 ist aus mechanisch beständigem Material wie Edelstahl, Stahllegierungen, Keramiken, Al₂O₃-Keramiken, usw. gefertigt. Wie in Fig. 4 bis 8 dargestellt, ist die erste Lage piezoelektrischen Materials 102 einseitig mit der Grundplatte 101 stoffschlüssig verbunden und die zweiten Lage piezoelektrischen Materials 103 ist einseitig mit einer Deckplatte 105 stoffschlüssig verbunden. Die Deckplatte 105 ist aus möglichst steifem Material wie Edelstahl, Stahllegierungen, Keramiken, Al₂O₃-Keramiken, usw. gefertigt. Für die stoffschlüssige Verbindung mit den Lagen piezoelektrischen Materials 102, 103 können Grundplatte 101 und Deckplatte 105 metallisiert sein. Die Steifigkeit ergibt sich aus dem Elastizitätsmodul des Materials der Deckplatte 105 und der Geometrie der Deckplatte 105. Eine grosse Steifigkeit ergibt unter mechanischen Spannungen eine geringe Volumenänderung und eine hohe Eigenfrequenz, was zu qualitativ hochwertigen Ausgangssignalen mit niedrigen Hysteresen von kleiner/gleich 3% FSO und hoher Linearität von kleiner/gleich 3% FSO führt.

Um die elektrisch positiven Oberflächenladungen aufzunehmen, ist die erste Lage piezoelektrischen Materials 102 auf der Seite der erzeugten elektrisch positiven Oberflächenladungen mit einer zweiten Metallisierung versehen. Eine stoffschlüssige Verbindung 106 der ersten Lage piezoelektrischen Materials 102 mit der Grundplatte 101 erfolgt über Diffusionsschweissen der zweiten Metallisierung mit der Grundplatte 101. Und um die elektrisch positiven Oberflächenladungen aufzunehmen, ist die zweite Lage piezoelektrischen Materials 103 auf der Seite der erzeugten elektrisch positiven Oberflächenladungen mit einer dritten Metallisierung versehen. Eine stoffschlüssige Verbindung 108 der zweite Lage piezoelektrischen Materials 103 mit der Deckplatte 105 erfolgt über Diffusionsschweissen der dritten Metallisierung mit der Deckplatte 105. Bei Kenntnis der vorliegenden Erfindung kann der Fachmann die stoffschlüssigen Verbindungen 106, 108 auch durch Löten oder durch Verkleben mit elektrisch leitfähigem Klebematerial, usw. realisieren. Die zweite und dritte Metallisierung dienen als Gegenelektrode zur Abnahme der elektrisch positiven Oberflächenladungen der beiden Lagen piezoelektrischen Material 102, 103. Die Gegenelektrode ist über nicht dargestellte elektrische Leiter mit dem Ladungsverstärker elektrisch verbunden. Die von der Mittenachse XX' abgewandte Aussenseite der Deckplatte 105 ist konvex geformt. Diese Aussenseite weist einen Krümmungsradius auf, der weitgehend der Entfernung von der Grundplatte 101 vom Mittelpunkt des Messtasters 100 zur Deckplatte 105 entspricht.

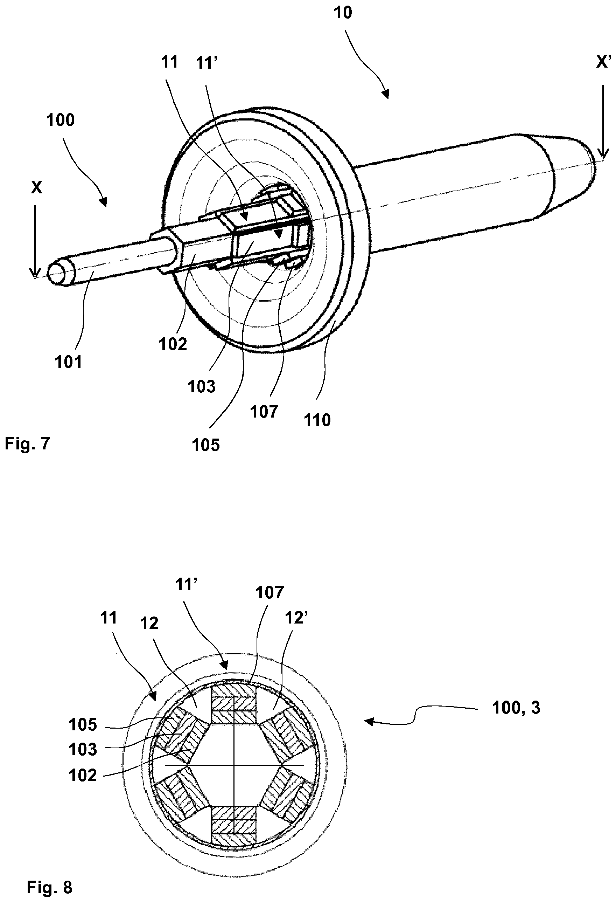

Wie in Fig. 3 dargestellt, weist das weibliche Kontaktelement 2 in der Ausführungsform einer Kontaktbuchse als Federelement sechs Kontaktbuchsenlamellen 21, 21' auf, die bereichsweise durch Kontaktbuchsenschlitze 22 voneinander beabstandet sind. Die Kontaktkraft F dieses weiblichen Kontaktelements 2 ist mit der Kontaktkraft-Prüfvorrichtung 10 nach Fig. 2 messbar. Dazu weist der Messtaster 100 wie in Fig. 7 und 8 dargestellt, sechs piezoelektrische Aufnehmer 11, 11' auf. Jeder piezoelektrische Aufnehmer 11, 11' ist mit der Grundplatte 101 mechanisch verbunden. Vorzugsweise sind die piezoelektrische Aufnehmer 11, 11' über die zweite Metallisierung der ersten Lage piezoelektrischen Materials 102 mit der Grundplatte 101 stoffschlüssig verbunden. Jeder piezoelektrische Aufnehmer 11, 11' umfasst eine erste Lage piezoelektrischen Materials 102 mit zweiter Metallisierung, eine Abnehmerelektrode 104, und eine Deckplatte 105 mit dritter Metallisierung. Die erste Lage piezoelektrischen Materials 102 ist im Kontaktbereich 3 über eine der Mittenachse XX' zugewandte Seite mit der Grundplatte 101 verbunden. Die Abnehmerelektrode 104 ist im Kontaktbereich 3 über eine der Mittenachse XX' zugewandte Seite mit der ersten Lage piezoelektrischen Materials 102 verbunden. Die zweite Lage piezoelektrischen Materials 103 ist im Kontaktbereich 3 über eine der Mittenachse XX' zugewandte Seite mit der Abnehmerelektrode 104 verbunden. Die Deckplatte 105 ist im Kontaktbereich 3 über eine der Mittenachse XX' zugewandte Seite mit der zweiten Lage piezoelektrischen Materials 103 verbunden. Breite und Länge eines piezoelektrischen Aufnehmers 11, 11' im Kontaktbereich 3 entspricht derjenigen einer Kontaktbuchsenlamelle 21, 21 Bezüglich der Mittenachse XX' des weiblichen Kontaktelements 2 und des Messtasters 100 sind die Kontaktbuchsenlamellen 21, 21' und die piezoelektrische Aufnehmer 11, 11' drehversetzt zueinander angeordnet. Beispielsweise sind die piezoelektrische Aufnehmer 11, 11' symmetrisch drehversetzt zueinander angeordnet, mit einem Winkel des Drehversatzes, der sich aus dem Winkelbetrag des Vollkreises von 360° geteilt durch die Anzahl der piezoelektrische Aufnehmer 11, 11' ergibt, im vorliegenden Fall also mit einem Winkel des Drehversatzes von 60°. Benachbarte piezoelektrische Aufnehmer 11, 11' sind durch einen Aufnehmerspalt 12, 12' voneinander beabstandet. Bezüglich der Mittenachse XX' kommt beim Eintauchen des Messtasters 100 in das weibliche Kontaktelement 2 genau ein piezoelektrischer Aufnehmer 11, 11' im Kontaktbereich 3 kraftschlüssig unterhalb genau einer Kontaktbuchsenlamellen 21, 21' zu liegen. Bei Kenntnis der vorliegenden Erfindung kann der Fachmann mehr oder weniger piezoelektrische Aufnehmer 11, 11' mit einem Drehversatz zueinander anordnen. Bei vier piezoelektrische Aufnehmer 11, 11' beträgt der Winkel des Drehversatzes 90°, Bei acht piezoelektrischen Aufnehmern 11, 11' beträgt der Winkel des Drehversatzes 45°. Die Federkraft der Kontaktbuchsenlamellen 21, 21' lässt sich so einzeln oder integral messen. Bei einzelner Messung der Federkraft misst jeder piezoelektrische Aufnehmer 11, 11' die Kontaktkraft F einer Kontaktbuchsenlamelle 21, 21', bei integraler Messung der Federkraft messen alle piezoelektrischen Aufnehmer 11, 11' die Kontaktkraft F aller Kontaktbuchsenlamellen 21, 21'. Auf diese Weise lässt sich feststellen, ob die Kontaktkraft F einzelner Kontaktbuchsenlamellen 21, 21' vordefinierte Sollwerte erfüllt oder ob die Kontaktkraft F des Federelements des weiblichen Kontaktelements 2 vordefinierte Sollwerte erfüllt.

Der Messtaster 100 weist eine membranartige Schutzhülle 107 auf. Die Schutzhülle 107 liegt bei Kontakt des Messtasters 100 mit dem elektrischen Kontaktelement 1, 2 direkt am elektrischen Kontaktelement 1, 2 an. Die Schutzhülle 107 erfüllt mindestens eine der folgenden Funktionen: so schützt sie die piezoelektrischen Aufnehmer 11, 11', sie schützt die Aufnehmerspalte 12, 12', und sie schützt die elektrischen Leiter 109, 109' des Messtasters 100. Die Schutzhülle 107 schützt vor schädlichen Umwelteinflüssen wie Verunreinigungen (Staub, Feuchtigkeit, usw.). Solche Verunreinigungen beeinflussen die Standzeit und die Verfügbarkeit des Messtasters 100 nachteilig. Dazu verhindert die Schutzhülle 107 durch ihre mechanische Ausdehnung das Eindringen solcher Verunreinigungen in den Messtaster 100. Die Schutzhülle 107 schützt aber auch vor elektrischen und elektromagnetischen Störeffekten in Form von elektromagnetischer Strahlung und ermöglicht somit die elektromagnetische Verträglichkeit des Messtasters 100 und somit der Kontaktkraft-Prüfvorrichtung 10. Dazu ist die Schutzhülle 107 aus elektrisch leitendem Material und absorbiert störende elektromagnetische Strahlung und leitet resultierende elektrische Ströme ab. Die Schutzhülle 107 ist durch ihre mechanische Ausdehnung eine elektrische Abschirmung des Messtasters 100. Schutzhülle 107, Schutzkappe 111 und Träger 110 bilden eine elektrische Abschirmung des Messtasters 100.

Details zur Schutzhülle 107 sind in den Fig. 5 bis 11 dargestellt. Die Schutzhülle 107 liegt in einem vorderen Bereich des Messtasters 100 beispielsweise bündig an der Schutzkappe 111 an und sie ist in einem hinteren Bereich des Messtasters 100 mit dem Träger 110 stoffschlüssig verbunden. Diese stoffschlüssige Verbindung erfolgt über Schweissen, Laserschweissen, Löten, Verkleben mit elektrisch leitfähigem Klebematerial, usw.. Die elektrischen Leiter 109, 109' bilden mit der ersten Metallisierung der ersten Lage piezoelektrischen Materials 102 eine elektrische Verbindung. Diese elektrische Verbindung ist von der Schutzhülle 107 auf die Mittenachse XX' bezogen, von aussen vollständig abgedeckt. Die Schutzhülle 107 ist aus Material wie Edelstahl, Stahllegierungen, usw. gefertigt. Die Schutzhülle 107 ist im Kontaktbereich 3 kreissymmetrisch und deckt im Kontaktbereich 3 die piezoelektrischen Aufnehmer 11, 11¹ und die Aufnehmerspalte 12, 12' bezüglich der Mittenachse XX' von aussen vollständig ab. Ein Krümmungsradius der Aussenseite der Deckplatte 105 ist kleiner/gleich einem Innenradius der Schutzhülle 107. Wie in Fig. 10 abgebildet, ist die Schutzhülle 107 im Kontaktbereich 3 sehr dünn, mit einer Dicke von kleiner/gleich 200pm, vorzugsweise 50pm. Zur Montage werden die piezoelektrischen Aufnehmer 11, 11' mit der Grundplatte 101 mechanisch verbunden und die Schutzhülle 107 wird in Richtung der länglichen Ausdehnung des Messtasters 100 über die mit der Grundplatte 101 mechanisch verbundenen piezoelektrischen Aufnehmer 11, 11' gezogen. Die Schutzhülle 107 liegt somit kraftschlüssig auf den Aussenseiten der Deckplatten 105 und spannt die Lagen piezoelektrischen Materials 102, 103 mit einer definierten Vorspannung gegen die Grundplatte 101 vor. Bei Kenntnis der vorliegenden Erfindung können Schutzhülle 107 und Schutzkappe 111 auch einstückig hergestellt sein.

### Bezugszeichenliste

- XX': Mittenachse
- F: Kontaktkraft
- 1: Kontaktstift
- 2: Kontaktbuchse
- 3: Kontaktbereich
- 10: Kontaktkraft-Prüfvorrichtung
- 11, 11': piezoelektrische Aufnehmer
- 12, 12': Aufnehmerspalte
- 21, 21': Kontaktbuchsenlamellen
- 22: Kontaktbuchsenschlitz
- 100: Messtaster
- 101: Grundplatte
- 102: erste Lage piezoelektrischen Materials
- 103: zweite Lage piezoelektrischen Materials
- 104: erste Metallisierung oder Abnehmerelektrode
- 105: Deckplatte
- 106: zweite Metallisierung
- 107: Schutzhülle
- 108: dritte Metallisierung
- 109, 109': elektrische Leiter
- 110: Träger
- 111: Schutzkappe

## Patentansprüche

1. Kontaktkraft-Prüfvorrichtung (10) mit einem Messtaster (100), welcher Messtaster (100) mit einem elektrischen Kontaktelement (1, 2) kontaktierbar ist und eine Kontaktkraft (F) eines Kontakts mit dem elektrischen Kontaktelement (1, 2) misst, wobei der Messtaster (100) piezoelektrisches Material (102, 103) aufweist, welches die Kontaktkraft (F) in einem Kontaktbereich (3) aufnimmt und Polarisationsladungen erzeugt, wobei der Messtaster (100) eine Abnehmerelektrode (104) aufweist; wobei piezoelektrisches Material (102, 103) mit ersten Metallisierungen versehen ist, welches piezoelektrische Material (102, 103) über die ersten Metallisierungen stoffschlüssig miteinander verbunden ist und die ersten Metallisierungen eine Abnehmerelektrode (104) bilden, welche Abnehmerelektrode (104) im Kontaktbereich (3) in Richtung einer Dickenausdehnung des Messtasters (100) vollständig vom piezoelektrischen Material (102, 103) umgeben ist und die Polarisationsladungen abnimmt; wobei der Messtaster (100) eine Grundplatte (101) aufweist, welche Grundplatte (101) in Richtung einer länglichen Ausdehnung des Messtasters (100) parallel zu einer Mittenachse (XX') des Messtasters (100) angeordnet ist; wobei eine erste Lage piezoelektrischen Materials (102) im Kontaktbereich (3) über eine der Mittenachse (XX') zugewandten Seite mit der Grundplatte (101) verbunden ist; wobei die Abnehmerelektrode (104) im Kontaktbereich (3) über eine der Mittenachse (XX') zugewandten Seite mit der ersten Lage piezoelektrischen Materials (102) verbunden ist; wobei eine zweite Lage piezoelektrischen Materials (103) im Kontaktbereich (3) über eine der Mittenachse (XX') zugewandten Seite mit der Abnehmerelektrode (104) verbunden ist; wobei eine Deckplatte (105) des Messtasters (100) stoffschlüssig mit der zweiten Lage piezoelektrischen Materials (103) verbunden ist oder wobei eine Deckplatte (105) des Messtasters (100) einseitig mit einer dritten Metallisierung versehen ist, welche Deckplatte (105) über die dritte Metallisierung stoffschlüssig mit der zweiten Lage piezoelektrischen Materials (103) verbunden ist; wobei der Messtaster (100) mehrere piezoelektrische Aufnehmer (11, 11') aufweist; wobei jeder piezoelektrische Aufnehmer (11, 11') eine erste Lage piezoelektrischen Materials (102) mit der zweiten Metallisierung, eine Abnehmerelektrode (104) und eine Deckplatte (105) mit der dritter Metallisierung umfasst; und wobei die piezoelektrischen Aufnehmer (11, 11') um eine Mittenachse (XX') des Messtasters (100) drehversetzt zueinander angeordnet sind.

2. Kontaktkraft-Prüfvorrichtung (10) nach Anspruch 1, **dadurch gekennzeichnet, dass** die Dicke der ersten Metallisierungen grösser/gleich der maximalen Rauhtiefe des piezoelektrischen Materials (102, 103) ist.

3. Kontaktkraft-Prüfvorrichtung (10) nach einem der Ansprüche 1 oder 2, **dadurch gekennzeichnet, dass** eine erste Lage piezoelektrischen Materials (102) in Richtung einer länglichen Ausdehnung des Messtasters (100) länger als eine zweite Lage piezoelektrischen Materials (103) ausgebildet ist; dass in dem Bereich wo die erste Lage piezoelektrischen Materials (102) länger ausgebildet ist, die erste Metallisierung der ersten Lage piezoelektrischen Materials (102) stoff- und/oder kraftschlüssig mit einem elektrischen Leiter (109, 109') verbunden ist.

4. Kontaktkraft-Prüfvorrichtung (10) nach einem der Ansprüche 1 bis 3, **dadurch gekennzeichnet, dass** die Grundplatte (101) des Messtasters (100) stoffschlüssig mit einer ersten Lage piezoelektrischen Materials (102) verbunden ist; und/oder dass eine Grundplatte (101) des Messtasters (100) einseitig mit einer zweiten Metallisierung versehen ist, welche Grundplatte (101) über die zweite Metallisierung stoffschlüssig mit einer ersten Lage piezoelektrischen Materials (102) verbunden ist.

5. Verwendung einer Kontaktkraft-Prüfvorrichtung (10) nach Anspruch 4, **dadurch gekennzeichnet, dass** falls der Messtaster (100) mit einem elektrischen Kontaktelement (2) kontaktiert, die Kontaktkraft (F) des im Kontaktbereich (3) mit der Kontaktkraft-Prüfvorrichtung (10) kontaktierten elektrischen Kontaktelements (2) schräg zur länglichen Ausdehnung des Messtasters (100) wirkt; dass das mit dem Messtaster (100) kontaktierbare elektrische Kontaktelement (2) eine Kontaktbuchse mit Kontaktbuchsenlamellen (21, 21') ist; und dass falls der Messtaster (100) mit einem elektrischen Kontaktelement (2) kontaktiert, beim Kontaktieren des Messtasters (100) mit dem elektrischen Kontaktelement (2) die piezoelektrischen Aufnehmer (11, 11') im Kontaktbereich (3) bezüglich der Mittenachse (XX') des Messtasters (100) unterhalb der Kontaktbuchsenlamellen (21, 21') des elektrischen Kontaktelements (2) zu liegen kommen.

6. Verwendung nach Anspruch 5, **dadurch gekennzeichnet, dass** falls der Messtaster (100) mit einem elektrischen Kontaktelement (2) kontaktiert, genau ein piezoelektrischer Aufnehmer (11, 11') des Messtasters (100) unterhalb genau einer Kontaktbuchsenlamelle (21, 21') liegt; und dass nach dem Kontaktieren des Messtasters (100) mit dem elektrischen Kontaktelement (2) jeder piezoelektrische Aufnehmer (11, 11') die Kontaktkraft (F) einer Kontaktbuchsenlamelle (21, 21') misst.

7. Verwendung nach Anspruch 5, **dadurch gekennzeichnet, dass** falls der Messtaster (100) mit einem elektrischen Kontaktelement (2) kontaktiert, nach dem Kontaktieren des Messtasters (100) mit dem elektrischen Kontaktelement (2) alle piezoelektrischen Aufnehmer (11, 11') die Kontaktkraft (F) aller Kontaktbuchsenlamellen (21, 21') messen.

8. Verwendung einer Kontaktkraft-Prüfvorrichtung (10) nach einem der Ansprüche 1 bis 4, **dadurch gekennzeichnet, dass** der Messtaster (100) mehrere piezoelektrische Aufnehmer (11, 11') aufweist; dass die piezoelektrischen Aufnehmer (11, 11') durch Aufnehmerspalte (12, 12') voneinander beabstandet sind; dass der Messtaster (100) eine Schutzhülle (107) aufweist; und dass die Schutzhülle (107) im Kontaktbereich (3) die piezoelektrischen Aufnehmer (11, 11') und die Aufnehmerspalte (12, 12') abdeckt.

9. Verwendung nach Anspruch 8, **dadurch gekennzeichnet, dass** die Schutzhülle (107) im Kontaktbereich (3) kraftschlüssig an den piezoelektrischen Aufnehmern (11, 11') anliegt.

10. Kontaktkraft-Prüfvorrichtung (10) nach einem der Ansprüche 1 bis 4, **dadurch gekennzeichnet, dass** der Messtaster (100) im Kontaktbereich (3) nur durch das piezoelektrischen Material (102, 103) elektrisch isoliert ist.

11. Verwendung einer Kontaktkraft-Prüfvorrichtung (10) nach einem der Ansprüche 1 bis 4, **dadurch gekennzeichnet, dass** das piezoelektrische Material (102, 103) aus piezoelektrischem Kristall besteht; und dass die Kontaktkraft-Prüfvorrichtung (10) bei Einsatztemperaturen grösser/gleich 100°C, vorzugsweise bei Einsatztemperaturen im Bereich von 140°C bis 160°C, vorzugsweise bei Einsatztemperaturen kleiner/gleich 600°C einsetzbar ist.

12. Verfahren zur Herstellung einer Kontaktkraft-Prüfvorrichtung (10) nach einem der Ansprüche 1 bis 4, **dadurch gekennzeichnet, dass** zwei Lagen piezoelektrischen Materials (102, 103) bereitgestellt werden, welche Lagen piezoelektrischen Materials (102, 103) einseitig mit ersten Metallisierungen metallisiert sind; und dass die zwei Lagen piezoelektrischen Materials (102, 103) über ihre ersten Metallisierungen stoffschlüssig miteinander verbunden werden; oder dass die ersten Metallisierungen der Lagen piezoelektrischen Materials (102, 103) über Diffusionsschweissen bei Metallisierungstemperaturen zwischen 100°c und 450°c stoffschlüssig miteinander verbunden werden.

## Claims

1. Contact force testing apparatus (10) comprising a measuring sensor (100), which measuring sensor (100) can be contacted with an electrical contact element (1, 2) and measures a contact force (F) of a contact with the electrical contact element (1, 2), wherein the measuring sensor (100) comprises piezoelectric material (102, 103) which receives the contact force (F) in a contact region (3) and produces polarization charges, wherein the measuring sensor (100) comprises an acceptor electrode (104); wherein piezoelectric material (102, 103) comprises first metallizations, which piezoelectric material (102, 103) is connected to one another in a firmly bonded manner by means of the first metallizations and the first meallizations form an acceptor electrode (104), which acceptor electrode (104) is completely surrounded by piezoelectric material (102, 103) in the contact region (3) in the direction of a thickness extension of the measuring sensor (100) and receives the polarization charges; wherein the measuring sensor (100) comprises a base plate (101), which base plate (101) is arranged in the direction of an elongated extension of the measuring sensor (100) parallel to a central axis (XX') of the measuring sensor (100); wherein a first layer of piezoelectric material (102) in the contact region (3) is connected to the base plate (101) via a side facing the central axis (XX'); wherein the pickup electrode (104) is connected in the contact region (3) to the first layer of piezoelectric material (102) via a side facing the central axis (XX'); wherein a second layer of piezoelectric material (103) is connected in the contact region (3) to the pickup electrode (104) via a side facing the central axis (XX');
wherein a cover plate (105) of the measuring sensor (100) is connected in a firmly bonded manner to a second layer of piezoelectric material (103) or wherein a cover plate (105) of the measuring sensor (100) is provided on one side with a third metallization, which cover plate (105) is connected via the third metallization in a firmly bonded manner to a second layer of piezoelectric material (103); wherein the measuring sensor (100) comprises a plurality of piezoelectric pick-ups (11, 11'); wherein each piezoelectric pick-up (11, 11') comprises a first layer of piezoelectric material (102) with the second metallization, an acceptor electrode (104) and a cover plate (105) with the third metallization; and wherein the piezoelectric pick-ups (11, 11') are arranged rotationally offset with respect to one another by a central axis (XX') of the measuring sensor (100).

2. The contact force testing apparatus (10) according to claim 1, **characterized in that** the thickness of the first metallizations is greater than/equal to the maximum roughness of the piezoelectric material (102, 103).

3. The contact force testing apparatus (10) according to any of the claims 1 or 2, **characterized in that** a first layer of piezoelectric material (102) in the direction of an elongate extension of the measuring sensor (100) is configured to be longer than a second layer of a piezoelectric material (103); that in the region where the first layer of piezoelectric material (102) is configured to be longer, the first metallization of the first layer of piezoelectric material (102) is connected in a firmly bonded manner and/or non-positively to an electrical conductor (109, 109').

4. The contact force testing apparatus (10) according to any one of claims 1 to 3, **characterized in that** a base plate (101) of the measuring sensor (100) is connected in a firmly bonded manner to a first layer of piezoelectric material (102); and/or that a base plate (101) of the measuring sensor (100) is provided on one side with a second metallization, which base plate (101) is connected via the second metallization in a firmly bonded manner to a first layer of piezoelectric material (102) .

5. Use of a contact force testing apparatus (10) according to claim 4, **characterized in that** when the measuring sensor (100) makes contact with the electrical contact element (2), the contact force (F) of the electrical contact element (2) contacted in the contact region (3) by the contact force testing apparatus (10) acts obliquely to the longitudinal extension of the measuring sensor (100); that the electrical contact element (2) which can be contacted by the measuring sensor (100) is a contact socket with contact socket lamellae (21, 21'); and that, when the measuring sensor (100) makes contact with the electrical contact element (2), the piezoelectric pick-ups (11, 11') lie underneath the contact socket lamellae (21, 21') of the electrical contact element (2) with respect to the central axis (XX') of the measuring sensor (100) .

6. Use according to claim 5, **characterized in that** when the measuring sensor (100) makes contact with the electrical contact element (2), precisely one piezoelectric pick-up (11, 11') of the measuring sensor (100) lies underneath precisely one contact socket lamella (21, 21'); and that after contacting the measuring sensor (100) with the electrical contact element (2) each piezoelectric pick-up (11, 11') measures the contact force (F) of a contact socket lamella (21, 21').

7. Use according to claim 5, **characterized in that** when the measuring sensor (100) makes contact with the electrical contact element (2), after contacting the measuring sensor (100) with the electrical contact element (2) all the piezoelectric pick-ups (11, 11') measure the contact force (F) of all the contact socket lamellae (21, 21').

8. Use of a contact force testing apparatus (10)according to any one of claims 1 to 4, **characterized in that** the measuring sensor (100) comprises a plurality of piezoelectric pick-ups (11, 11'); that the piezoelectric pick-ups (11, 11') are spaced apart from one another by pick-up gaps (12, 12'); that the measuring sensor (100) has a protective sleeve (107); and that the protective sleeve (107) covers the piezoelectric pick-ups (11, 11') and the pick-up gaps (12, 12') in the contact region (3).

9. Use according to claim 8, **characterized in that** the protective sleeve (107) abuts non-positively against the piezoelectric pick-ups (11, 11') in the contact region (3).

10. Contact force testing apparatus (10) according to any one of claims 1 to 4, **characterized in that** the measuring sensor (100) is only electrically insulated by the piezoelectric material (102, 103) in the contact region (3).

11. Use of a contact force testing apparatus (10) according to any one of claims 1 to 4, **characterized in that** the piezoelectric material (102, 103) consists of piezoelectric crystal; and that the contact force testing apparatus (10) can be used at operating temperatures greater than/equal to 100°C, preferably at operating temperatures in the range of 140°C to 160°C, preferably at operating temperature less than/equal to 600°C.

12. Method for producing a contact force testing apparatus (10) according to any one of claims 1 to 4, **characterized in that** two layers of piezoelectric material (102, 103) are prepared, which layers of piezoelectric material (102, 103) are metallized on one side with first metallizations; and that the two layers of piezoelectric material (102, 103) are connected to one another in a firmly bonded manner via their first metallizations; or that the first metallizations of the layers of piezoelectric material (102, 103) are connected to one another in a firmly bonded manner by diffusion welding at metallization temperatures between 100°C and 450°C.

## Revendications

1. Dispositif d'essai d'une force de contact (10) comportant une sonde de mesure (100), ladite sonde de mesure (100) étant apte à être mise en contact avec un élément de contact (1, 2) électrique et mesure une force de contact (F) d'un contact avec l'élément de contact (1, 2) électrique; dans lequel ladite sonde de mesure (100) comporte un matériau piézoélectrique (102, 103) qui reçoit ladite force de contact (F) dans une zone de contact (3) et génère des charges de polarisation, dans lequel ladite sonde de mesure (100) comporte une électrode collectrice (104); dans lequel ledit matériau piézoélectrique (102, 103) est muni avec des premières métallisations, ledit matériaux piézoélectriques (102, 103) étant liés les uns aux autres par une liaison de matière entre lesdites premières métallisations et lesdites premières métallisations constituant une électrode collectrice (104), ladite électrode collectrice (104) étant complètement entourée du matériau piézoélectrique (102, 103) dans le sens de l'extension d'épaisseur de la sonde de mesure (100) dans la zone de contact (3) et étant apte à collecter lesdits charges de polarisation; dans lequel la sonde de mesure (100) comporte une plaque de base (101), ladite plaque de base (101) étant agencée en parallèle à un axe central (XX') de la sonde de mesure (100) dans le sens de l'extension longitudinale de la sonde de mesure (100); dans lequel une première couche de matériau piézoélectrique (102) est connectée à la plaque de base (101) dans la zone de contact (3) par son côté faisant face à l'axe central (XX'); dans lequel l'électrode collectrice (104) est connectée à la première couche de matériau piézoélectrique (102) dans la zone de contact (3) par son côté faisant face à l'axe central (XX'); dans lequel une seconde couche de matériau piézoélectrique (103) est connectée à l'électrode collectrice (104) dans la zone de contact (3) par son côté faisant face à l'axe central (XX'); dans lequel une plaque supérieure (105) de la sonde de mesure (100) est connectée à la seconde couche de matériau piézoélectrique (103) par liaison de matière ou dans lequel une plaque supérieure (105) de la sonde de mesure (100) est munie d'un côté avec une troisième métallisation, laquelle plaque supérieure (105) étant connectée à la seconde couche de matériau piézoélectrique (103) par une liaison de matière par l'intermédiaire de la troisième métallisation; dans lequel ladite sonde de mesure (100) comporte plusieurs capteurs piézoélectriques (11, 11'); dans lequel chaque capteur piézoélectrique (11, 11') comporte une première couche de matériau piézoélectrique (102) comportant la seconde métallisation, une électrode collectrice (104) et une plaque supérieure (105) comportant la troisième métallisation; et dans lequel lesdits capteurs piézoélectriques (11, 11') sont agencés l'un par rapport à l'autre de manière décalés en rotation autour d'une axe central (XX') de la sonde de mesure (100).

2. Dispositif d'essai d'une force de contact (10) selon la revendication 1, **caractérisé en ce que** l'épaisseur des premières métallisations est supérieure/égale à la profondeur de rugosité maximale du matériau piézoélectrique (102, 103).

3. Dispositif d'essai d'une force de contact (10) selon l'une quelconque des revendications 1 ou 2, **caractérisé en ce qu'**une première couche du matériau piézoélectrique (102) est plus longue qu'une seconde couche du matériau piézoélectrique (103) dans le sens de l'extension longitudinale de la sonde de mesure (100); **en ce que** dans la zone où la première couche du matériau piézoélectrique (102) est plus longue, la première métallisation de la première couche de matériau piézoélectrique (102) est connectée à un conducteur électrique (109, 109') par liaison de matière et/ou par liaison de force.

4. Dispositif d'essai d'une force de contact (10) selon l'une quelconque des revendications 1 à 3, **caractérisé en ce que** la plaque de base (101) de la sonde de mesure (100) est reliée à une première couche de matériau piézoélectrique (102) par liaison de matière; et/ou **en ce qu'**une plaque de base (101) de la sonde de mesure (100) est munie d'un côté d'une seconde métallisation, laquelle plaque de base (101) étant reliée à une première couche de matériau piézoélectrique (102) par liaison de matière par l'intermédiaire de la seconde métallisation.

5. Utilisation d'un dispositif d'essai d'une force de contact (10) selon la revendication 4, **caractérisée en ce que** si la sonde de mesure (100) est en contact avec un élément de contact (2) électrique, la force de contact (F) de l'élément de contact (2) électrique contacté par le dispositif d'essai d'une force de contact (10) au niveau de la zone de contact (3) agisse obliquement à l'extension longitudinale de la sonde de mesure (100); **en ce que** ledit élément de contact (2) électrique apte à être contacté par le dispositif d'essai d'une force de contact (10) est une douille de contact comportant des lamelles de la douille de contact (21, 21'); et **en ce que** si la sonde de mesure (100) est en contact avec un élément de contact (2) électrique, les capteurs piézoélectriques (11, 11') viennent de se situer dans la zone de contact (3) en dessous desdites lamelles de la douille de contact (21, 21') de l'élément de contact (2) électrique par rapport à l'axe centrale (XX') de la sonde de mesure (100) lors d'un contact de la sonde de mesure (100) avec un élément de contact (2) électrique.

6. Utilisation selon la revendication 5, **caractérisée en ce que** si la sonde de mesure (100) est en contact avec un élément de contact (2) électrique, exactement un capteur piézoélectrique (11, 11') de la sonde de mesure (100) se situe en dessous d'exactement une lamelle de la douille de contact (21, 21'); et **en ce qu'**après un contact de la sonde de mesure (100) avec un élément de contact (2) électrique chaque capteur piézoélectrique (11, 11') mesure la force de contact (F) d'une lamelle de la douille de contact (21, 21').

7. Utilisation selon la revendication 5, **caractérisée en ce que** si la sonde de mesure (100) est en contact avec un élément de contact (2) électrique, après un contact de la sonde de mesure (100) avec un élément de contact (2) électrique tous les capteurs piézoélectriques (11, 11') mesurent la force de contact (F) de toutes les lamelles de la douille de contact (21, 21').

8. Utilisation d'un dispositif d'essai d'une force de contact (10) selon l'une quelconque des revendications 1 à 4, **caractérisée en ce que** la sonde de mesure (100) comporte plusieurs capteurs piézoélectriques (11, 11'); **en ce que** lesdits capteurs piézoélectriques (11, 11') sont espacés l'un de l'autre par des fentes de capteur (12, 12); **en ce que** la sonde de mesure (100) comporte une gaine protectrice (107) et **en ce que** ladite gaine protectrice (107) couvre les capteurs piézoélectriques (11, 11') et les fentes de capteur (12, 12') dans la zone de contact (3).

9. Utilisation selon la revendication 8, **caractérisée en ce que** la gaine protectrice (107) repose sur les capteurs piézoélectriques (11, 11') de manière à établir une liaison de force dans la zone de contact (3).

10. Dispositif d'essai d'une force de contact (10) selon l'une quelconque des revendications 1 à 4, **caractérisé en ce que** la sonde de mesure (100) est électriquement isolée uniquement par le matériau piézoélectrique (102, 103) dans la zone de contact (3).

11. Utilisation d'un dispositif d'essai d'une force de contact (10) selon l'une quelconque des revendications 1 à 4, **caractérisée en ce que** le matériau piézoélectrique (102, 103) est constitué de cristal piézoélectrique; et **en ce que** le dispositif d'essai d'une force de contact (10) est apte à être utilisé à des températures d'utilisation supérieures/égales à 100°C, de préférence à des températures d'utilisation comprises dans une gamme de 140°C à 160°C, de préférence à des températures d'utilisation inférieures/égales à 600°C.

12. Procédé de fabrication d'un dispositif d'essai d'une force de contact (10) selon l'une quelconque des revendications 1 à 4, **caractérisé en ce que** deux couches de matériau piézoélectrique (102, 103) sont prévues, lesquelles couches de matériau piézoélectrique (102, 103) sont métallisées d'un côté avec des premières métallisations; et **en ce que** les deux couches de matériau piézoélectrique (102, 103) sont reliées l'une à l'autre par une liaison der matière par l'intermédiaire de leurs premières métallisations; ou **en ce que** lesdites premières métallisations des couches de matériau piézoélectrique (102, 103) sont reliées l'une à l'autre par une liaison der matière effectuée par soudage par diffusion à des températures de métallisation comprises entre 100°C et 450°C.
